Europäisches Patentamt

European Patent Office

Office européen des brevets

(11) Publication number: **0 042 302**
**B1**

# EUROPEAN PATENT SPECIFICATION

(45) Date of publication of patent specification: **14.11.84**

(21) Application number: **81302704.2**

(22) Date of filing: **16.06.81**

(51) Int. Cl.³: **B 01 D 46/10, C 04 B 21/00, B 01 D 29/20**

(54) Method for producing ceramic honeycomb filters.

(30) Priority: **16.06.80 JP 80107/80**
**28.08.80 JP 117736/80**
**28.08.80 JP 117737/80**

(43) Date of publication of application:
**23.12.81 Bulletin 81/51**

(45) Publication of the grant of the patent:
**14.11.84 Bulletin 84/46**

(84) Designated Contracting States:
**BE DE FR GB IT SE**

(56) References cited:
**DE-A-2 248 359**
**DE-B-1 097 344**
**FR-A-1 515 158**
**US-A-3 938 959**

(73) Proprietor: **NGK INSULATORS, LTD.**
**2-56, Suda-cho, Mizuho-ku**
**Nagoya-shi, Aichi 467 (JP)**

(72) Inventor: **Higuchi, Noboru**
**7-313, Aza-Omoteyama Yagoto**
**Tenpaku-Cho Tenpaku-Ku Nagoya City (JP)**
Inventor: **Yano, Teruo**
**739, Aza-Uetamae Ohaza-Shimada**
**Tenpaku-Cho Tenpaku-Ku Nagoya City (JP)**
Inventor: **Ohnishi, Masahiro**
**704-7, Ohaza-Nukata**
**Kuwana City (JP)**

(74) Representative: **Whalley, Kevin et al**
**Marks & Clerk 57/60 Lincoln's Inn Fields**
**London WC2A 3LS (GB)**

Courier Press, Leamington Spa, England.

## Description

The present invention relates to a method for producing ceramic honeycomb filters.

Conventional filters utilize filter media such as steel wool, ceramic fibres, porous porcelain and the like. In filters intended to remove fine particles, filter media having a fine mesh size are necessary but this results in an increase in pressure drop when a high filtration rate is required. In order to increase the filter area of the prior sheet-form, plate-form or cylindrical filters, relatively simple structures, such as corrugated structures, double cylindrical forms and the like have been used but these do not lead to a very marked increase in the filter area. Therefore, in order to avoid high pressure drop, it is necessary to use a fairly large filter volume and it is difficult to obtain a small filter.

Honeycomb bodies have recently been used, for example, as supports for catalysts for purifying exhaust gases from automobiles or as heat exchangers for gas turbines and the like. Basically such honeycomb bodies comprise a body having a large number of parallel channels extending therethrough, the channels being, for example, circular, triangular, tetragonal, hexagonal or corrugated in cross-section.

The channels are uniformly distributed through the body and are parallel and straight, so that the resistance to gas flow is low and the surface area per unit volume is large. Since the channels are separated by thin walls, the body can be heated up with only a small amount of heat. The thin partition walls separating the channels serve to conduct a gas to react with a catalyst coated onto them, e.g. to purify exhaust gases containing harmful gases such as carbon monoxide, hydrocarbons, and nitrogen oxides.

Ceramic honeycomb bodies may be produced by various processes, for example, a paper dipping process wherein an organic porous sheet is impregnated with a ceramic slurry and a honeycomb structural body is formed and the formed body is fired; a pipe binding process wherein a large number of shaped pipes are bound together; an extrusion process wherein a raw material is extruded through a die provided with a large number of shaped slits; or a press process. In more detail, in the extrusion process, finely powdered ceramic raw material, such as alumina, silica, mullite, silicon carbide, silicon nitride and/or cordierite, is mixed with an organic binder and a plasticizer and the mixture is kneaded to prepare a composition consisting mainly of ceramic raw material. This composition is then extruded through a die provided with a large number of slits, which form a monolithic structure containing a large number of parallel channels of the appropriate cross-section. The shaped structure is then dried and fired to give a porous honeycomb body.

A honeycomb body has a thin wall thickness and a markedly large surface area per unit volume. It is an object of this invention to use a honeycomb body as a filter. For example, by sealing alternate given channels at one end face of a honeycomb body composed of a porous ceramic material in a checker flag pattern and sealing the remaining channels at the other end face, a compact ceramic filter capable of removing fine particles and having a low pressure drop in which the thickness of the filter media is far thinner than that of a conventional ceramic filter and the available area of the filter can be enlarged, can be provided.

The present invention provides a method for producing a ceramic honeycomb filter which comprises providing each end face of a porous ceramic honeycomb body having a plurality of parallel channels extending therethrough from one end face of the body to another end face thereof, with a film having perforations therein corresponding to given channels opening at the end faces, and charging a sealing material into the channels through the perforated film to seal the end portions of the given channels, and wherein given channels, not sealed at one said end face, are sealed at the other end face.

The film may be applied to the end face of the body in unperforated form and perforations formed in it when it is in place on the end face of the honeycomb body or may be a pre-perforated film applied to the end face of the honeycomb body.

In the invention the perforations in one film correspond to given channels in the one end face of the body, for example alternate channels; and the perforations in the other film correspond to channels not corresponding to the perforations in the first film.

The sealing material is suitably prepared by mixing a binder and a plasticizer with a ceramic material or an alumina cement mixture and having dilatancy.

The use of alumina cement as a sealing material has the advantage that it hardens at room temperature due to hydration of calcium aluminate and adheres so strongly that a ceramic honeycomb filter can be produced without re-firing after sealing. On the other hand, alumina cement has the defect that calcium oxide in the alumina cement tends to corrode the partition walls of the ceramic honeycomb body at high temperature, resulting in possible deterioration in heat resistance and filtering ability. In order to overcome this problem, the CaO content of the alumina cement is preferably not more than 27% by weight and the sealing material is preferably a mixture of alumina cement and aggregates.

In the following description, reference will be made to the accompanying drawings, in which:

Figure 1 is a front view of one embodiment of a honeycomb body;

Figure 2 is a side view, partially in section of the honeycomb body shown in Figure 1;

2

Figure 3 is a front view of one embodiment of a ceramic honeycomb filter produced according to the invention;

Figure 4 is a side view, partially in section, of the ceramic honeycomb filter shown in Figure 3;

Figure 5 is a schematic view to illustrate the operation of a filter of the present invention;

Figure 6 is a schematic view to illustrate a method for perforating a film using a needle jig;

Figure 7 is a schematic view to illustrate the forced charging of a sealing material into the channels of a honeycomb body by means of a piston;

Figure 8 is a schematic view to illustrate the vibration charging of a sealing material into the channels of a honeycomb body;

Figure 9 is an enlarged cross-sectional view of a sealed portion of a channel in a honeycomb filter;

Figures 10 and 13 are schematic illustrations of possible defects which may arise in the vicinity of the sealed portion of a channel in a honeycomb filter; and

Figure 14 is a graph showing the result of tests made on different ceramic honeycomb filters produced in accordance with the invention.

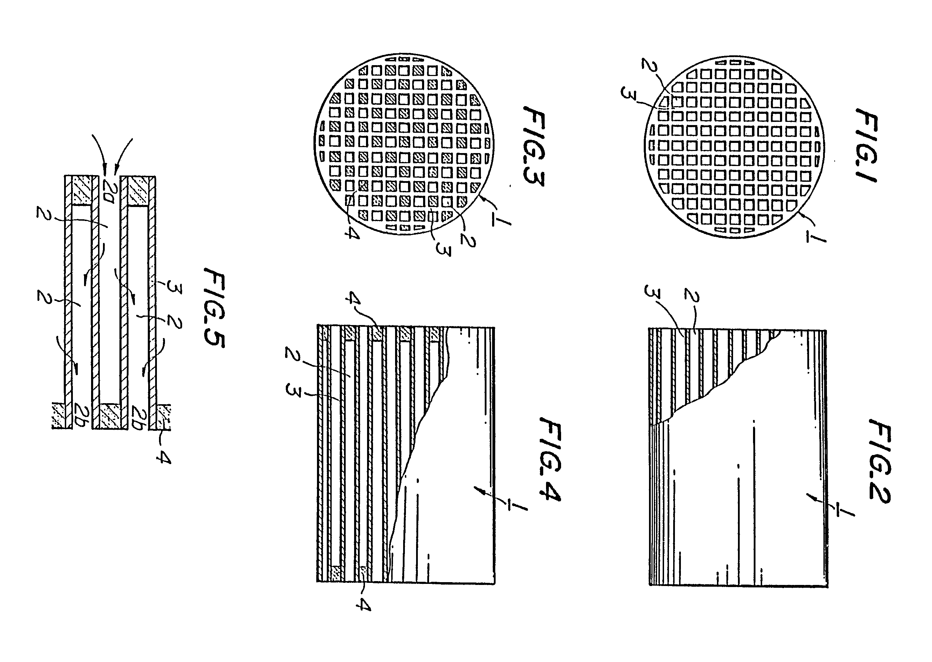

As shown in Figures 1 and 2, a honeycomb ceramic body 1 has a plurality of parallel channels 2 of tetragonal cross-section, extending therethrough and separated by thin partition walls 3.

In the ceramic filter shown in Figures 3 and 4 alternate channels 2 in the ceramic honeycomb body 1 are sealed, at one face of the body, with plugs of a sealing material 4 and the remaining channels 2 are sealed at the other face of the body with plugs of sealing material 4, to form checkered patterns at each end face.

Figure 5 is a schematic partial enlarged view of the ceramic honeycomb filter shown in Figure 4 to illustrate the operation of a filter according to the present invention. The filter is set so that the direction of the channels is parallel to the direction of flow of a gas to be filtered. The gas flows into the filter through opening 2a in the end face of the filter at the gas inlet side and passes through the thin porous ceramic partition walls 3 forming the channels, since the other end of the channel 2 is sealed, and passes the adjacent channels, which open at the gas outlet side of the filter, and is then discharged from the openings 2b. Thus, the thin porous partition walls 3 defining the channels 2 perform the function of a filter and fine particles in the gas may be filtered out.

A ceramic honeycomb filter according to the present invention is suitably produced as follows. Firstly, a film is adhered to one end face of a ceramic honeycomb body. This film should have sufficient strength not to be broken when the sealing material is charged into the channels in the next step, and should be capable of being removed by being burnt off by firing or by being simply peeled off.

As the film, paper, paper impregnated with a resin, or a film of organic high molecular weight polymer, such as a polyester or vinyl resin, are preferable. The film is preferably tightly adhered to the whole of the end face of the honeycomb body and thus there may be used as film a paper impregnated with a sticky resin on one surface.

Then the applied film is perforated to form perforations appropriately located with respect to the channels 2 to be sealed. The film may be perforated, as shown in Figure 6, by means of a needle jig 6 provided with needles 5 which is pressed onto the film by means of a wheel provided with teeth at an appropriate pitch which is rotated on the film; or the film may be cut with a knife to form holes.

The holes may be formed at any desired position within the channel portions and the size of the holes does not have to be equal to that of the channels but may be somewhat smaller than that of the channels. After forming holes in the film, a sealing material is charged into the channels through the holes to seal the end portions of the given channels.

The sealing material should preferably be dilatant. If the sealing material is dilatant it loses its fluidity when it is charged into the channels under pressure, and is charged into the channels in such a form that the top portions of the sealing material become hemispherical and it can uniformly seal the channels in a substantially completely filled state across the shape of said channels and to a uniform depth throughout the channels to be sealed. If the sealing material is dilatant, then when charged into the channels even if the size of the holes is somewhat smaller than that of the channels, it expands the hole portions by pressure and enters the channels and adheres tightly to seal the channels. On the other hand, if a thixotropic sealing material is used, the fluidity of the sealing material increases with pressure and it does not expand the bored hole portions and enters deeply into the inner portions of the channels while the top portion of the sealing material maintains a pointed form and the strength of adhesion to the inner walls of the channels is low.

The sealing material should be dilatant and this can be obtained by selecting the ceramic material, binder and/or plasticizer to be used.

The term "dilatancy" used herein means the property of increasing in volume when changed in shape because of an increase of the space between the particles, that is, the property of a viscous suspension which sets solid under the influence of pressure.

The sealing materials should be tightly bound to the partition wall, so as to prevent the dust-containing gas from passing through the ceramic honeycomb filter without being filtered at the partition walls. When using the ceramic honeycomb filter at high temperatures, both the sealing material and the honeycomb structural body must have high heat resistance. More particularly, it is preferable to select the sealing material from ceramic materials which hardly form a liquid phase even

3

at temperatures required to fire the ceramic honeycomb body.

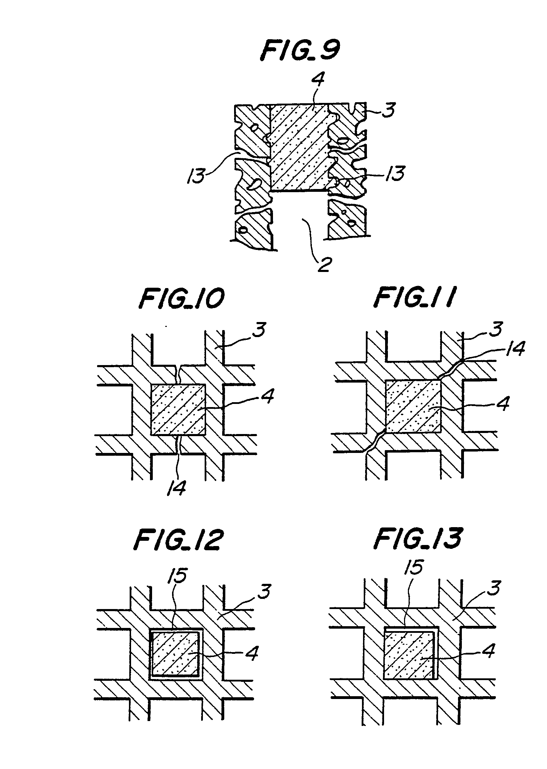

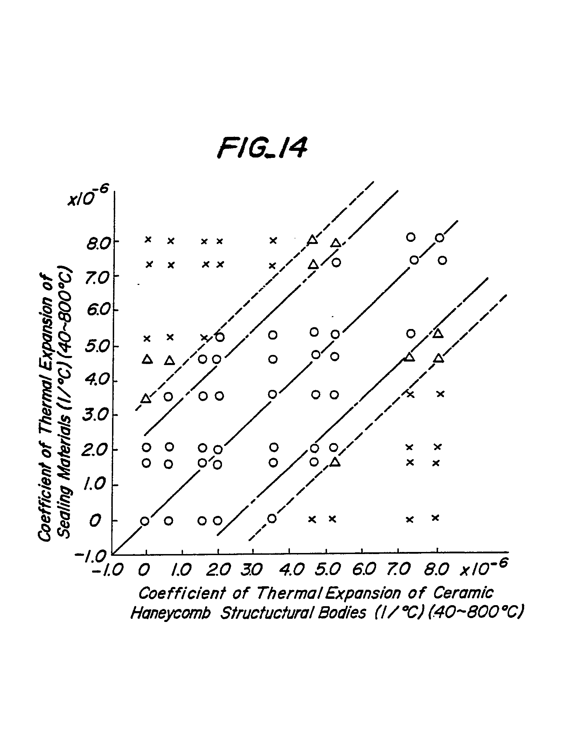

Such sealing material adheres to the channel walls not mainly by a melting reaction but by a combined mechanism of physical plugging of the channels by the sealing material and physical penetration of the sealing material into pores 13 in the partition walls 13, as shown in Figure 9. After sealing, when the ceramic honeycomb structural body is fired and then cooled, cracks 14 may be formed in the partition walls 3, as shown in Figures 10 and 11, or gaps 15 may be formed between the partition walls 3 and the sealing material 4 as shown in Figures 12 and 13, and the sealing material may drop out due to different shrinkage between the partition walls and the sealing material. In order to overcome this problem where an apparent reaction phase does not exist at the contact portion between the ceramic honeycomb structural body and the sealing material, the coefficients of thermal expansion of the ceramic honeycomb structural body and the sealing material should meet certain requirements. It has been found that when the ceramic honeycomb body has a coefficient of thermal expansion, in the range 40 to 800°C, of from 0 to $8.0 \times 10^{-6}/°C$ a satisfactory filter can be obtained if the difference between the coefficient of thermal expansion (alpha $_A$) of the honeycomb and that (alpha$_b$) of the sealing material, in the range from 40°C to 800°C, is not more than $3.5 \times 10^{-6}/°C$, preferably not more than $2.5 \times 10^{-6}/°C$.

As the sealing material, use may be made, for example, of cordierite or mullite. A particular cordierite based sealing material comprises a binder containing 0.5—2.0 parts by weight of methyl cellulose and 5—15 parts by weight of glycerine, 100 parts by weight of cordierite powder, and 25—35 parts by weight of water as plasticizer. The mixture is kneaded to obtain a green batch. A mullite based sealing material comprises a binder containing 0.5—2.0 parts by weight of methyl cellulose and 5—20 parts by weight of polyvinyl alcohol, 100 parts by weight of mullite powder and 20—35 parts by weight of water. The mixture is kneaded to obtain a green batch. These materials have the desirable dilatancy.

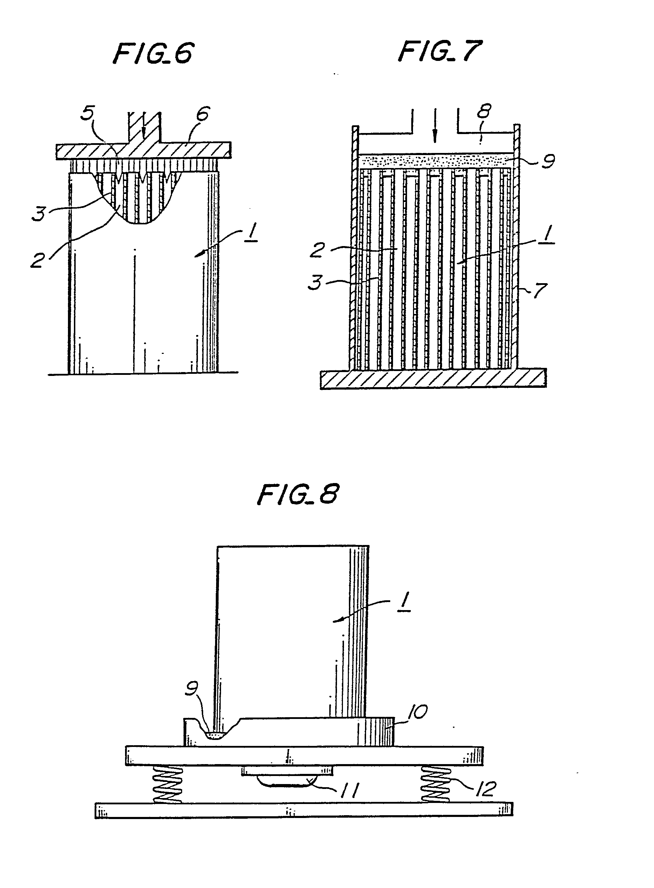

In one process for charging the sealing material into channels through holes in the film, as shown in Figure 7, a honeycomb structural body 1 having an applied coated film is placed a cylinder 7 having a more or less larger outer diameter than the honeycomb body; sealing material 9 is placed thereon and then the sealing material 9 is pressed by a piston 8 to charge the sealing material into the channels 2. The pressure is applied at a load of 490—4900 kPa (5—50 kg/cm²), so that the depth of the sealing material in the channel becomes uniform. If the sealing material is too hard and must be charged under a high pressure the following procedure may be adopted. Firstly holes are formed in a film at the channel portions not be sealed and an epoxy resin or the like is charged into the channels by a dipping process and hardened. The film is then peeled off and a sealing material is charged into the channels not sealed with the epoxy resin or like under high pressure.

When a sealing material having a high viscosity is used, an end portion of a honeycomb body provided with a perforated film is dipped into sealing material to charge said material into the channels.

In any case, the honeycomb body having channels sealed with the ceramic sealing material is finally fired at a temperature of 800—1,400°C to sinter the sealing material and to remove the film or resin thereby to produce a ceramic honeycomb filter wherein the given end portions are sealed.

An alumina cement sealing material may be produced by adding 50—300 parts by weight of mullite or chamotte powder and 25—40 parts by weight of water to 100 parts by weight of alumina cement. The thus formed alumina cement has a high dilatancy and when pressure is applied, the cement immediately sets solid and it is difficult to fill the channels with the batch to the desired depth by the application of pressure. However such a cement may be introduced into the channels by a vibration technique. Thus, as shown in Figure 8, one end portion of the fired honeycomb body 1 provided with the perforated film is dipped in a dish 10 containing a sealing material 9 and vibration is applied thereto by means of a vibrator 11 to charge the alumina cement into the channels.

After charging with an alumina cement sealing material, the honeycomb body is placed in a hardening chamber at a temperature of 50—60°C, under a humidity of 80—95% for 2—4 hours to harden the sealing material and then the film is peeled off to obtain the desired ceramic honeycomb filter.

A series of tests have been carried out using systematic combinations of ceramic honeycomb structural bodies formed of various materials having gradually varying coefficients of thermal expansion. Each of the combinations was formed into a ceramic honeycomb filter as described below in the examples and the conditions of the joint between the sealing material and the honeycomb body after firing were observed. Table 5 (below) and Figure 14 show the results of these observations. When the coefficient of thermal expansion of the sealing material was less than that of the ceramic honeycomb body and the difference therebetween exceeded $3.5 \times 10^6/°C$, cracks were frequently produced in the partition walls. On the contrary, when the coefficient of thermal expansion of the sealing material was larger than that of the ceramic honeycomb body and the difference therebetween exceeded $3.5 \times 10^{-6}/°C$, gaps were formed between the partition walls and the sealing material, and sometimes the plugs of sealing material fell out from the honeycomb bodies. Further, to check the performance of the thus obtained ceramic honeycomb filters, the sound ceramic honeycomb filters, as determined by the aforementioned observations, were heat treated at 1,200°C for 6 hours. As a result, it was found that satisfactory combinations which were free from said defects of cracks and gaps had differences of

# 0 042 302

coefficients of thermal expansion between the ceramic honeycomb structural body and the sealing material not greater than $2.5 \times 10^{-6}/°C$, in absolute values.

Once the above relationship between the coefficients of thermal expansion of the honeycomb body and the sealing material is given, even if the firing temperature of the ceramic honeycomb body is varied and even if the heat-treating temperature of the ceramic honeycomb filter after sealing with the sealing material is varied, as long as the coefficients of thermal expansion of the ceramic materials and the firing temperatures thereof are known beforehand, it is possible to determine the suitability of a combination of these materials without actually producing a ceramic honeycomb filter from the materials. Furthermore, if the sealing material is different from the ceramic honeycomb body for example from the point of view of the workability of the sealing operation, limitations on the porosity of the sealing material or the like, the aforementioned range of difference of the coefficients of thermal expansion will provide an index for determining the suitability of the sealing material.

In order that the invention may be well understood the following examples are given by way of illustration only. In the examples all parts are by weight unless otherwise stated.

## Example 1

This example describes the production of a honeycomb filter, in which both ends are sealed in a checker flag pattern as shown in Figure 3, from a cordierite honeycomb body of circular cross-section having a diameter of 120 mm, a length of 150 mm, a partition wall thickness of 0.30 mm and having, in cross-section, 31 channels/cm² (200 channels/inch²).

Firstly a film composed of paper impregnated with a sticky resin on one surface was tightly applied to one end face of the fired ceramic honeycomb body. Then, the film was pressed with a needle jig so that the needles were inserted into the channels to be sealed in a checker flag pattern, to form holes.

A sealing material was prepared by adding 1 part of methyl cellulose, 10 parts of glycerine and 33 parts of water to 100 parts by weight of pulverized cordierite raw material, which passed through a 105 $\mu$m screen, and kneading the mixture to form a green batch. Then, the honeycomb structural body provided with the perforated film was placed in a cylinder having a diameter of 126 mm and the sealing material was placed on the end of the honeycomb body and a load of 2940 KPa (30 kg/cm²) was applied onto the sealing material downwardly by means of a piston to charge the sealing material into the channels through the perforations in the film. The same operation was carried out with respect to the other end face of the body to charge sealing material into those channels whose ends were not sealed by the first operation. Then, the honeycomb body was fired at a maximum temperature of 1,400°C for two hours. In the resultant honeycomb filter, the depth of the sealed portions from the end faces was $8 \pm 3$ mm and the sealing material completed filled and clogged channels and gas did not leak through the sealing portions.

The pressure drop through the filter was measured using air at room temperature and at a flow rate of 2 m³/min. the pressure drop was 60 mm $H_2O$. This filter area of the filter was about 15,500 cm².

## Example 2

A film composed of polyester, one surface of which was coated with a sticky resin, was applied to one end surface of a non-fired dried mullite honeycomb body of circular cross-section having a diameter of 120 mm, a length of 150 mm, a wall thickness partition of channels of 0.4 mm and, in cross-section, about 15.5 channels/cm² (100 channels/inch²). The film was cut with a sharp knife at the channel portions to be sealed so that a checker flag pattern was formed. A sealing material was prepared by adding 1 part of methyl cellulose, 8 parts of polyvinyl alcohol and 30 parts of water to 100 parts of mullite powder, which passed through a 44 micron screen and kneading the mixture. The honeycomb structural body provided with the bored film was put in a cylinder and the sealing material was placed on the honeycomb body and a pressure of 2940 KPa (30 kg/cm²) was applied thereon downwardly by a piston to charge the sealing material into the channels. The same operation was carried on the other end face of the honeycomb to charge the sealing material into the channels not sealed in the first operation, after which the honeycomb body was fired at a maximum temperature of 1,400°C for two hours. In the resultant mullite honeycomb filter, the depth of the sealed portions from the end faces of the honeycomb was $8 \pm 3$ mm and the sealing material substantially completely filled the channels and gas did not leak through the sealing portions.

The filler had a filter area of about 1,000 cm² and a pressure drop, measured as described in Example 1, of 50 mmH$_2$O at a flow rate of 2 m³/min.

## Example 3

A film of paper impregnated with a sticky resin at one surface was applied on an opening end surface of a fired cordierite honeycomb body as described in Example 1. Then needles were pressed onto the film to form holes so that the channels to be sealed were in a checkered pattern. The end of the honeycomb body provided with the perforated film, was dipped into a vessel containing a sealing material (as described below) and vibration was applied thereto by means of a vibrator 11 as shown in Figure 8 to charge the sealing material into the channels.

The sealing material was prepared by adding 33 parts of water to 100 parts of a ceramic raw material obtained by mixing commercially available alumina cement and pulverized mullite, which passed through a 44 mm screen, in a weight ratio of 1:1. This sealing material showed a higher dilatancy than the sealing materials shown in Examples 1 and 2 and could not be satisfactorily charged into the channels merely by pressure but sealing could be effected by applying vibration.

The same operation was repeated to the other face of the honeycomb body to seal the ends of the channels not sealed in the first operation. The honeycomb body charged with the sealing material was placed in a hardening chamber and allowed to stand at a temperature of 55°C and a humidity of 90% for two hours and then the films applied to the end faces were peeled off to give a ceramic honeycomb filter.

The depth of the sealing portions was $10 \pm 4$ mm and the sealing material substantially completely filled the channels and gas did not leak through the sealing portion. The filter area of the filter was about 15,000 cm$^2$ and the pressure drop, measured as described in Example 1, was 70 mm H$_2$O at a flow rate of 2 m$^3$/min.

## Example 4

A film of paper, one surface of which was impregnated with a sticky resin, was applied to the end face of a cordierite honeycomb body of a circular cross-section having a diameter of 120 mm, a length of 120 mm, a partition wall thickness of 0.4 mm and, in cross-section, about 15.5 channels/cm$^2$ (100 channels/inch$^2$). A wheel provided with teeth manufactured conforming to the pitch of channels to be sealed in a checker flag patter was rotated on the film to form homes through the film.

A sealing material was prepared by mixing 20 parts by weight of starch paste and 100 parts by weight of mullite powders and the resulting sealing material was placed on the honeycomb body and a load of 980 KPa (10 kg/cm$^2$) was applied thereto by a piston to charge the sealing material into the channels and the thus treated honeycomb structural body was fired at a maximum temperature of 1,300°C for two hours.

The procedure was repeated to seal the channels of the other face of the honeycomb.

In the obtained honeycomb filter, the sealing material did not tightly adhere to the partition walls even at a position of 70—120 mm from the end face of the channels and the gas leakage was high and the sealing material was easily partially disengaged easily from the channels.

The results of the examples of the ceramic honeycomb filters according to the present invention are shown in the following Table 1.

TABLE 1

| Example | Material of honeycomb structural body | Sealing material | Binder | Sealing process | Firing | Sealing result | | |
|---|---|---|---|---|---|---|---|---|
| | | | | | | Depth (mm) | Leak | Estimation of sealing state |
| 1 | cordierite | cordierite | methyl cellulose + glycerine | press | o | 8 ± 3 | no | o |
| 2 | mullite | mullite | methyl cellulose + PVA | press | o | 8 ± 3 | no | o |
| 3 | cordierite | alumina cement + mullite | — | vibration | x | 10 ± 4 | no | o |
| 4 | cordierite | mullite | starch paste | press | o | 70～120 | leak | x |

Note: Firing, Mark o : Firing was carried out.
Mark x : Firing was not carried out.

Estimation of sealing state,
Mark o : Satisfied.
Mark x : Not satisfied.

0042302

## Example 5

Three kinds of commercially available alumina cement containing 38.0, 27.0 and 18.0% by weight of calcium oxide, respectively, were mixed with fine granular alumina powder, to form cement compositions having gradually varying contents of calcium oxide, namely 38.0% by weight, 32.5% by weight, 27.0% by weight, 18.0% by weight and 9.0% by weight.

Paste-like sealing materials were made by adding suitable amounts of water to the aforementioned cement compositions, and kneading the mixtures well.

As ceramic honeycomb structural body to be sealed by the sealing materials thus prepared, fired cordierite and mullite honeycomb structural bodies having the physical characteristics described in Example 1 were used.

A sheet of paper having an adhesive resin impregnated onto one surface thereof was adhered to one end face of the ceramic honeycomb structural body. A plurality of holes were formed in the paper by means of a needle at the positions of the channels to be sealed, so as to form a check-flag pattern in the paper. To facilitate the sealing of the remaining channels at the opposite end of the ceramic honeycomb body, another sheet of paper with similar adhesive was adhered to the opposite end of the body, and holes were similarly formed in the paper to allow sealing of the appropriate channels.

One end of the ceramic honeycomb structural body with the perforated paper was dipped in one of the paste-like sealing materials, and the sealing material was forced into the channels through the holes by shaking with a vibrator. The sealing material was forced into the opposite ends of the remaining channels in a similar manner.

One end of the ceramic honeycomb structural body with the perforated paper was dipped in one of the paste-like sealing materials, and the sealing material was forced into the channels through the holes by shaking with a vibrator. The sealing material was forced into the opposite ends of the remaining channels in a similar manner.

The ceramic honeycomb structural body thus provided with the sealing material was cured in a hardening chamber at 55°C and a humidity of 90% for 2 hours, to harden the sealing material. After the sealing material had hardened, the sheets of paper and adhesive resin were removed from the ends of the honeycomb body, so as to provide a ceramic honeycomb filter employing each sealing material.

The alumina cement was already firmly adhered to the channels. Each ceramic honeycomb filter was then allowed to stand for about 24 hours, and thereafter heat treated in an electric furnace at a predetermined temperature of 1,100°C to 1,400°C for 24 hours. Upon completion of the heat treatment, possible changes at the sealed portions due to high-temperature reactions between the partition walls and the cement during the heat treatment were checked by ocular observation. The adhering strengths of the sealed portions of those samples which were found to be free from the aforementioned high-temperature reactions were measured by a push-pull scale.

Table 2 shows the result of the observations and measurements.

TABLE 2

| CaO amount in alumina cement (% by weight) | Kind of ceramic honeycomb structural body | Corrosion of partitition wall after heat treatment | | | | Adhesion strength after heat treatment (kg/cm) | | |
|---|---|---|---|---|---|---|---|---|
| | | 1,100°C | 1,200°C | 1,300°C | 1,400°C | 1,100°C | 1,200°C | 1,300°C |
| 38.0 | cordierite | A | C | C | C | 140 | — | — |
| | mullite | A | B | C | C | 150 | — | — |
| 32.5 | cordierite | A | B | C | C | 130 | — | — |
| 27.0 | cordierite | A | A | C | C | 125 | 150 | — |
| | mullite | A | A | A | B | 120 | 145 | 160 |
| 18.0 | cordierite | A | A | B | C | 130 | 160 | — |
| 9.0 | cordierite | A | A | B | C | 130 | · 150 | — |

Explanation of the symbols in the table:  A :  No corrosion observed.

B :  Some corrosion observed.

C :  Considerable corrosion observed.

0042 302

# 0 042 302

## Example 6

Sealing materials of different chemical compositions were prepared by using different combinations of alumina cements containing 38% by weight and 27.0% by weight of calcium oxide; aggregates consisting of synthetic mullite powder, which passed through a 125 $\mu$m or 250 $\mu$m screen; and separately prepared aggregates consisting of cordierite ceramic powder which passed through a 149 $\mu$m screen. Ceramic honeycomb structural bodies were prepared using cordierite ceramic materials. A number of ceramic honeycomb filters were made by using the honeycomb structural bodies thus prepared by the process of Example 5.

The degree of corrosion and the adhesion strength of the sealing materials in the ceramic honeycomb filters thus made were checked by observation and measured in the same manner described in Example 5.

Table 3 shows the results of the observations and measurements.

TABLE 3

| CaO amount in alumina cement (% by weight) | Kind of ceramic honeycomb structural body | Content of aggregate | | | Corrosion of partition wall after heat treatment | | | | Adhesion strength after heat treatment (kg/cm) | | |
|---|---|---|---|---|---|---|---|---|---|---|---|
| | | Kind | grain size | cement/aggregate (weight ratio) | 1,100°C | 1,200°C | 1,300°C | 1,400°C | 1,100°C | 1,200°C | 1,300°C |
| 38.0 | cordierite | mullite | less than 125 $\mu$m | 100/200 | A | A | C | C | 120 | 120 | — |
| | | mullite | less than 250 $\mu$m | 100/200 | A | A | C | C | 110 | 120 | — |
| | | cordierite | less than 149 $\mu$m | 100/200 | A | A | C | C | 110 | 100 | — |
| 27.0 | cordierite | mullite | less than 125 $\mu$m | 100/200 | A | A | A | B | 120 | 130 | 140 |
| | | mullite | less than 250 $\mu$m | 100/200 | A | A | A | B | 110 | 125 | 145 |
| | | cordierite | less than 149 $\mu$m | 100/200 | A | A | A | B | 110 | 120 | 135 |

Explanation of the symbols in the table:
A : No corrosion was observed on the partition wall.
B : Some corrosion was observed on the partition wall,
C : Considerable corrosion was observed on the partition wall.

### Example 7

The materials used in this Example were selected so as to provide for gradual variation of the coefficients of thermal expansion of the honeycomb body and sealing material.

Mixture of starting materials were prepared by using nine ceramic materials having different coefficients of thermal expansion as shown in Table 4. A monolithic honeycomb body was made from each of the mixtures by extrusion, and the extruded honeycomb body was dried and fired at 1,400°C for 6 hours to produce a ceramic honeycomb body. The ceramic honeycomb body after firing was 120 mm in diameter and 150 mm in length, and the partition walls between adjacent channels thereof were 0.30 mm thick. Each ceramic honeycomb body thus produced had about 200 channels per square inch (about 31 channels per square centimetre) in its cross section.

### TABLE 4

| Ceramic material | Coefficient of thermal expansion $\times 10^{-6}$ (1/°C) (40–800°C) |
|---|---|
| Zirconia spinel ($ZrO_2$–$MgO.Al_2O_3$) | 8.0 |
| Clay bond silicon carbide (SiC) | 7.3 |
| Mullite-zircon ($3Al_2O_3.2SiO_2$–$ZrO_2.SiO_2$) | 5.2 |
| Mullite ($3Al_2O_3.2SiO_2$) | 4.7 |
| Zircon ($ZrO_2.SiO_2$) | 3.5 |
| Cordierite-mullite ($2MgO.2Al_2O_3.5SiO_2$–$3Al_2O_3.2SiO_2$) | 2.0 |
| Non-oriented cordierite ($2MgO.2Al_2O_3.5SiO_2$) | 1.6 |
| Oriented cordierite ($2MgO.2Al_2O_3.5SiO_2$) | 0.7 |
| Mullite aluminum titanate ($3Al_2O_3.2SiO_2$–$Al_2O_3.TiO_2$) | 0.0 |

In Table 4, the non-orientated cordierite was prepared by extending and firing the powder of fired cordierite ceramics once fired, while the oriented cordierite was prepared by extruding and firing the powder of raw materials to produce cordierite upon firing. The difference of the coefficients of thermal expansion between the oriented and non-oriented cordierites due to the presence or absence of orientation of the cordierite crystals in the ceramic honeycomb body.

Separately, eight of the ceramic materials shown in Table 4, excluding the oriented cordierite, were dried and ground so as to obtain powders with a grain size of less than 149 $\mu$m (100 mesh). Paste-like sealing materials were formed by adding polyvinyl alcohol and water as a bonding agent to the ceramic material powder thus obtained.

A sheet of paper was adhered to one end face of each ceramic honeycomb structural body and a plurality of holes were formed in the paper by a needle at the selected channels to be sealed, so as to form a checkered pattern on the paper. The appropriate paste-like sealing material was charged into the channels through the holes in the paper and dried. Those channels which had not been closed by the paste-like sealing material were similarly closed at the opposite end face of the ceramic honeycomb body. The sealed structural body was then fired at 1,400°C. The paper was burnt off during firing to give a ceramic honeycomb filter. In order to check all combinations of ceramic honeycomb bodies and sealing materials 72 different ceramic honeycomb filters were formed.

12

# 0 042 302

After firing, the condition of the sealed portions of the channels was checked by observation. Sound samples, which had no cracks in the partition walls and had no gaps between the partition walls and the plugs formed of the sealing material, were further heat treated at 1,200°C for 6 hours, and the condition of the sealed portions was again checked by observation.

Table 5 and Figure 14 show the results of the observations. In Figure 14, a cross mark shows the presence of defects after firing to seal the filter, a triangular mark shows the presence of defects after the heat treatment at 1,200°C despite being sound after firing to seal the filter, and a circular mark shows absence of any defects after both firing at 1,400°C and heating at 1,200°C.

It was concluded from the result of the observations that when the coefficient of thermal expansion of the ceramic honeycomb body, at 40°C to 800°C was from 0 to $8.0 \times 10^6/°C$ and the difference between the coefficients of thermal expansion of the ceramic honeycomb body and the sealing material, at 40°C to 800°C, was from $3.5 \times 10^6/°C$ in absolute values, more preferably $2.5 \times 10^6/°C$ in absolute values, then sound ceramic honeycomb filters could be obtained.

In the Table, the symbols employed have the following meanings: ·

$\alpha_A$: Coefficient of thermal expansion of ceramic honeycomb body

$\alpha_B$: Coefficient of thermal expansion of sealing material

A: Sound after firing and after heat treatment

B: Sound after firing but defective after heat treatment, and usable under certain conditions

C: Defective and unusable

TABLE 5(a)

Result of Tests on Different Combinations of Ceramic
Honeycomb Structural Bodies and Sealing Materials

| Ceramic honeycomb structural body | Sealing Material | Difference of coefficients of thermal expansion $\alpha_A - \alpha_B$ ($\times 10^{-6}/{}^\circ C$) | Condition of sealed portion after firing | Condition of sealed portion after heat treatment | Overall evaluation |
|---|---|---|---|---|---|
| Zirconia-spinel | zirconia-spinel | 0 | A | A | A |
| | Clay bond silicon carbide | −0.7 | A | A | A |
| | mullite-zircon | −2.8 | A | C | B |
| | mullite | −3.3 | A | C | B |
| | zircon | −4.5 | C | − | C |
| | cordierite mullite | −6.0 | C | − | C |
| | non-oriented cordierite | −7.3 | C | − | C |
| | mullite-aluminum titanate | −8.0 | C | − | C |

TABLE 5(b)

| Ceramic honeycomb structural body | Sealing material | Difference of coefficients of thermal expansion $\alpha_A - \alpha_B$ ($\times 10^{-6}/^\circ$C) | Condition of sealed portion after firing | Condition of sealed portion after heat treatment | Overall evaluation |
|---|---|---|---|---|---|
| Clay bond silicon carbide | zirconia-spinel | 0.7 | A | A | A |
| | caly bond silicon carbide | 0 | A | A | A |
| | mullite-zircon | −2.1 | A | A | A |
| | mullite | −2.6 | A | C | B |
| | zircon | −3.8 | C | — | C |
| | Cordierite mullite | −5.3 | C | — | C |
| | non-oriented cordierite | −6.6 | C | — | C |
| | mullite aluminum titanate | −7.3 | C | — | C |

0 042 302

15

TABLE 5(c)

| Ceramic honeycomb structural body | Sealing material | Difference of coefficients of thermal expansion $\alpha_A - \alpha_B$ ($\times 10^{-6}/{}^\circ C$) | Condition of sealed portion after firing | Condition of sealed portion after heat treatment | Overall evaluation |
|---|---|---|---|---|---|
| Mullite-zircon | zirconia-spinel | 2.8 | A | C | B |
| | clay bond silicon carbide | 2.1 | A | A | A |
| | mullite-zircon | 0 | A | A | A |
| | mullite | −0.5 | A | A | A |
| | zircon | −1.7 | A | A | A |
| | cordierite mullite | −3.2 | A | A | A |
| | non-oriented cordierite | −4.5 | A | C | B |
| | mullite-aluminum titanate | −5.2 | C | − | C |

TABLE 5(d)

| Ceramic honeycomb structural body | Sealing material | Difference of coefficients of thermal expansion $\ddot{a}_A - a_B$ ($\times 10^{6}/^{\circ}C$) | Condition of sealed portion after firing | Condition of sealed portion after heat treatment | Overall evaluation |
|---|---|---|---|---|---|
| Mullite | zirconia-spinel | 3.3 | A | C | B |
| | clay bond silicon carbide | 2.6 | A | C | B |
| | mullite-zircon | 0.5 | A | A | A |
| | mullite | 0 | A | A | A |
| | zircon | −1.2 | A | A | A |
| | cordierite mullite | −2.7 | A | A | A |
| | non-oriented cordierite | −4.0 | A | A | A |
| | mullite-aluminum titanate | −4.7 | C | − | C |

0 042 302

TABLE 5(e)

| Ceramic honeycomb structural body | Sealing material | Difference of coefficients of thermal expansion $\alpha_A - \alpha_B$ ($\times 10^{-6}/°C$) | Condition of sealed portion after firing | Condition of sealed portion after heat treatment | Overall evaluation |
|---|---|---|---|---|---|
| Zircon | zirconia-spinel | 4.5 | C | — | C |
| | clay bond silicon carbide | 3.8 | C | — | C |
| | mullite-zircon | 1.7 | A | A | A |
| | mullite | 1.2 | A | A | A |
| | zircon | 0 | A | A | A |
| | cordierite mullite | −1.5 | A | A | A |
| | non-oriented cordierite | −2.8 | A | A | A |
| | mullite-aluminum titanate | −3.5 | A | A | A |

TABLE 5(f)

| Ceramic honeycomb structural body | Sealing material | Difference of coefficients of thermal expansion $a_A - a_B$ ($\times 10^{-6}/°C$) | Condition of sealed portion after firing | Condition of sealed portion after heat treatment | Overall evaluation |
|---|---|---|---|---|---|
| Cordierite mullite | zirconia-spinel | 6.0 | C | — | C |
| | clay bond silicon carbide | 5.3 | C | — | C |
| | mullite-zircon | 3.2 | A | A | A |
| | mullite | 2.7 | A | A | A |
| | zircon | 1.5 | A | A | A |
| | cordierite mullite | 0 | A | A | A |
| | non-oriented cordierite | −1.3 | A | A | A |
| | mullite-aluminum titanate | −2.0 | A | A | A |

TABLE 5(g)

| Ceramic honeycomb structural body | Sealing material | Difference of coefficients of thermal expansion $\alpha_A - \alpha_B$ ($\times 10^{-6}/°C$) | Condition of sealed portion after firing | Condition of sealed portion after heat treatment | Overall evaluation |
|---|---|---|---|---|---|
| Non-orientation cordierite | zirconia-spinel | 7.3 | C | — | C |
| | clay bond silicon carbide | 6.6 | C | — | C |
| | mullite-zircon | 4.5 | C | — | C |
| | mullite | 4.0 | A | C | B |
| | zircon | 2.8 | A | A | A |
| | cordierite mullite | 1.3 | A | A | A |
| | non-oriented cordierite | 0 | A | A | A |
| | mullite-aluminum titanate | −0.7 | A | A | A |

0 042 302

TABLE 5(h)

| Ceramic honeycomb structural body | Sealing material | Difference of coefficients of thermal expansion $\alpha_A - \alpha_B$ ($\times 10^{-6}/°C$) | Condition of sealed portion after firing | Condition of sealed portion after heat treatment | Overall evaluation |
|---|---|---|---|---|---|
| Cordierite | zirconia-spinel | 6.4 | C | — | C |
| | clay bond silicon carbide | 5.7 | C | — | C |
| | mullite-zircon | 3.6 | C | — | C |
| | mullite | 3.1 | A | A | A |
| | zircon | 1.9 | A | A | A |
| | cordierite mullite | 0.4 | A | A | A |
| | non-oriented cordierite | −0.9 | A | A | A |
| | mullite-aluminum titanate | −1.6 | A | A | A |

TABLE 5(i)

| Ceramic honeycomb structural body | Sealing material | Difference of coefficients of thermal expansion $\alpha_A - \alpha_B$ ($\times 10^{-6}$/°C) | Condition of sealed portion after firing | Condition of sealed portion after heat treatment | Overall evaluation |
|---|---|---|---|---|---|
| Mullite-aluminum titanate | zirconia-spinel | 8.0 | C | — | C |
| | clay bond silicon carbide | 7.3 | C | — | C |
| | mullite-zircon | 5.2 | C | — | C |
| | Mullite | 4.7 | A | C | B |
| | zircon | 3.5 | A | C | B |
| | cordierite mullite | 2.0 | A | A | A |
| | non-oriented cordierite | 0.7 | A | A | A |
| | mullite-aluminum titanate | 0 | A | A | A |

As may be seen from the above examples, by the method for producing a ceramic honeycomb filter according to the invention wherein a film is adhered to the end surfaces of the ceramic honeycomb body, holes are formed in the film at given channels, a batch of a dilatant sealing material is charged into the given channels to a given uniform depth to seal the channels and then the thus treated honeycomb body is fired to integrate the honeycomb body and the sealing material, a stable ceramic honeycomb filter wherein the sealed portions have the same high heat resistance as the ceramic honeycomb structural body can be easily produced.

Furthermore, the use of alumina cement as a sealing material provides the advantage in that firm adhesion of the sealing material to the partition walls can be obtained without firing. In addition, when an alumina cement containing not more than 27% of calcium oxide (CaO), preferably together with suitable aggregates, is used as sealing material, it is possible to obtain a ceramic honeycomb filter having high heat resistance and high filtering ability and free from corrosion of the partition wall even at high temperatures in excess of 1,200°C. When the sealing materials are ceramic materials of the present invention, the sealing materials contain no ingredients which undergo a melting reaction, so that the ceramic honeycomb body is not denatured and its heat resistance is not reduced.

As a result, a ceramic honeycomb filter having a high filtering efficiency and a high heat resistance is provided, which filter is very effective in removing fine soot particles from the high-temperature exhaust gases of diesel and other internal combustion engines. Furthermore, if the ceramic honeycomb filters produced according to the present invention are arranged upstream of a ceramic honeycomb containing a deposited catalyst for removing unwanted gases it serves effectively to prevent clogging of the ceramic honeycomb catalyst and fine particles, such as carbon dust, collected through the filter function are burnt by the exhaust gas at high temperatures to be converted into unwanted gases, which are removed by the catalyst, so that the ceramic honeycomb filter according to the present invention does not require to be cleaned and can be used continuously.

## Claims

1. A method for producing a ceramic honeycomb filter from a porous ceramic honeycomb body (1) having a plurality of channels (2) extending therethrough from one end face to another end face thereof, characterized in that it comprises the steps of providing each end face of the honeycomb body with a perforated film the perforations in which correspond to given channels opening at the said end faces, and charging a sealing material (4) into the channels through the perforations in the film to seal the end portions of the given channels, and in that given channels, not sealed at one said end face, are sealed at the other end face.

2. A method as claimed in claim 1, characterized in that an unperforated film is first applied to the end face of the honeycomb body and perforations are formed in the film at the desired locations with the film *in situ* on the end face of the honeycomb body.

3. A method as claimed in claim 1, characterized in that a perforated film, having perforations at the desired locations, is applied to the end face of the honeycomb body.

4. A method as claimed in any one of the preceding claims, characterized in that the film is formed of a paper, paper impregnated with a resin or a high molecular weight organic polymer film.

5. A method as claimed in any one of the preceding claims, characterized in that the sealing material is a dilatant material.

6. A method as claimed in any one of the preceding claims, characterized in that the sealing material is obtained by mixing a ceramic material with a binder and a plasticizer, or is an alumina cement mixture.

7. A method as claimed in claim 6, characterized in that the alumina cement contains not more than 27% by weight of calcium oxide.

8. A method as claimed in claim 6 or 7, characterized in that the sealing material is a mixture of an alumina cement and one or more aggregates.

9. A method as claimed in claim 6, characterized in that the binder is a cellulose derivative, a polyhydric alcohol or a mixture thereof.

10. A method as claimed in any one of the preceding claims, characterized in that the sealing material is charged into the channels under pressure, by vibration and/or by dipping.

11. A method as claimed in any one of claims 1—6, 9 and 10, characterized in that the sealing material is a ceramic material and the difference between the coefficient of the thermal expansion of the ceramic honeycomb body, from 40°C to 800°C, and that of the sealing material, from 40°C to 800°C, is not more than $3.5 \times 10^{-6}$/°C.

12. A method as claimed in claim 11, characterized in that the said difference is not more than $2.5 \times 10^{-6}$/°C.

13. A method as claimed in claim 11 or 12, characterized in that the ceramic honeycomb body is made of cordierite or mullite ceramic material, and the said sealing material comprises a cordierite ceramic material or a mullite ceramic material.

14. A modification of the method claimed in claim 1 in which the perforations in the films correspond to channels which it is not intended to seal, a heat fugitive material capable of being dissi-

# 0 042 302

pated on firing or heat sealing of the honeycomb is charged into the channels, the films are removed, and the remaining channels, not charged with the heat fugitive material, are sealed with a sealing material.

## Patentansprüche

1. Verfahren zur Herstellung eines keramischen Wabenfilters aus einem porösen, keramischen Wabenkörper (1) mit einer Vielzahl von Kanälen (2), die sich durch denselben hindurch von einem Stirnflächenende zum anderen Stirnflächenende erstrecken, dadurch gekennzeichnet, daß an jedem Stirnflächenende des Wabenkörpers ein gelochter Film angeordnet wird, dessen Lochungen mit bestimmten Kanälen an den Stirnflächenenden korrespondieren, und daß durch diese Lochungen im Film ein Dichtungsmaterial (4) in die Kanäle eingebracht wird, um die Endbereiche dieser bestimmten Kanäle abzudichten, und daß bestimmte Kanäle, die an dem einen Stirnflächenende nicht abgedichtet worden sind, an dem anderen Stirnflächenende abgedichtet werden.

2. Verfahren nach Anspruch 1, dadurch gekennzeichnet, daß zunächst ein ungelochter Film an dem Stirnflächenende des Wabenkörpers angebracht wird und Lochungen in diesem Film an den gewünschten Stellen gebildet werden, während sich der Film am Stirnflächenende des Wabenkörpers in situ befindet.

3. Verfahren nach Anspruch 1, dadurch gekennzeichnet, daß ein gelochter Film, welcher Lochungen an den gewünschten Stellen aufweist, am Stirnflächenende des Wabenkörpers angebracht wird.

4. Verfahren nach einem der vorhergehenden Ansprüche, dadurch gekennzeichnet, daß der Film aus einem Papier, aus einem mit einem Harz imprägnierten Papier oder aus einem Film aus einem organischen Polymer mit hohem Molekulargewicht besteht.

5. Verfahren nach einem der vorhergehenden Ansprüche, dadurch gekennzeichnet, daß das Dichtungsmaterial ein dehnbares Material ist.

6. Verfahren nach einem der vorhergehenden Ansprüche, dadurch gekennzeichnet, daß das Dichtungsmaterial durch Mischen eines keramischen Materials mit einem Bindemittel und einem Plastifiziermittel gewonnen wird oder aus einer Aluminiumoxid-Zementmischung besteht.

7. Verfahren nach Anspruch 6, dadurch gekennzeichnet, daß der Aluminiumoxidzement nicht mehr als 27 Gewichtsprozente Kalziumoxid enthält.

8. Verfahren nach Anspruch 6 oder 7, dadurch gekennzeichnet, daß das Dichtungsmaterial eine Mischung aus Aluminiumoxidzement und einem oder mehreren Zusatzstoffen ist.

9. Verfahren nach Anspruch 7, dadurch gekennzeichnet, daß das Bindemittel ein Zellulosederivat, ein mehrwertiger Alkohol oder eine Mischung daraus ist.

10. Verfahren nach einem der vorhergehenden Ansprüche, dadurch gekennzeichnet, daß das Dichtungsmaterial unter Druck, durch Vibration und/oder durch Eintauchen in die Kanäle eingebracht wird.

11. Verfahren nach einem der Ansprüche 1 bis 6, 9 und 10, dadurch gekennzeichnet, daß das Dichtungsmaterial ein keramisches Material ist und der Unterschied zwischen dem Wärmeausdehnungskoeffizienten des keramischen Wabenkörpers von 40°C bis 800°C und desjenigen des Dichtungsmaterials von 40°C bis 800°C nicht mehr als $3,5 \times 10^{-6}/°C$ beträgt.

12. Verfahren nach Anspruch 11, dadurch gekennzeichnet, daß der Unterschied nicht größer ist als $2,5 \times 10^{-6}/°C$.

13. Verfahren nach Anspruch 11 oder 12, dadurch gekennzeichnet, daß der Wabenkörper aus dem keramischen Material Cordierit oder Mullit hergestellt wird, und daß das Dichtungsmaterial keramisches Material Cordierit oder Mullit enthält.

14. Modifikation des Verfahrens nach Anspruch 1, dadurch gekennzeichnet, daß die Lochungen des Films solchen Kanälen entsprechen, die nicht abgedichtet werden sollen, daß ein wärmeflüchtiges Material in die Kanäle eingefüllt wird, das sich beim Brennen oder Wärmedichten der Wabe verflüchtigt, daß die Filme entfernt werden, und daß die verbleibende Kanäle, die nicht mit dem wärmeflüchtigen Material gefüllt sind, mit einem Dichtungsmaterial abgedichtet werden.

## Revendications

1. Procédé pour produire un filtre céramique en nid d'abeilles à partir d'un corps céramique poreux en nid d'abeilles (1) comportant plusieurs canaux (2) s'étendant à travers lui d'une face d'extrémité à une autre face d'extrémité de ce corps, caractérisé en ce qu'il comprend les étapes consistant à munir chaque face d'extrémité du corps en nid d'abeilles d'un film perforé dont les perforations correspondent à des canaux donnés débouchant sur lesdites faces d'extrémité, et à introduire à travers les perforations du film une matière d'étanchéité (4) dans les canaux afin d'obturer les parties d'extrémité des canaux donnés, et en ce que les canaux donnés qui ne sont pas obturés sur l'une des faces d'extrémité, le sont sur l'autre face d'extrémité.

2. Procédé selon la revendication 1, caractérisé en ce qu'on applique tout d'abord un film non perforé sur la face d'extrémité du corps en nid d'abeilles, et on forme des perforations aux endroits voulus dans le film qui est en place sur la face d'extrémité du corps en nid d'abeilles.

24

**0 042 302**

3. Procédé selon la revendication 1, caractérisé en ce qu'on applique sur la face d'extrémité du corps en nid d'abeilles un film perforé, comportant des perforations aux endroits voulus.

4. Procédé selon l'une quelconque des revendications précédentes, caractérisé en ce que le film est constitué par du papier, du papier imprégné d'une résine ou un film de polymère organique à poids moléculaire élevé.

5. Procédé selon l'une quelconque des revendications précédentes, caractérisé en ce que la matière d'étanchéité est une matière dilatante.

6. Procédé selon l'une quelconque des revendications précédentes, caractérisé en ce que la matière d'étanchéité est obtenue par mélange d'une matière céramique avec un liant et un plastifiant, ou est un mélange à base de ciment d'alumine.

7. Procédé selon la revendication 6, caractérisé en ce que le ciment d'alumine ne contient pas plus de 27% en poids d'oxyde de calcium.

8. Procédé selon la revendication 6 ou 7, caractérisé en ce que la matière d'étanchéité est un mélange d'un ciment d'alumine et d'un ou plusieurs agrégats.

9. Procédé selon la revendication 6, caractérisé en ce que le liant est un dérivé de la cellulose, un polyalcool ou un mélange de ces derniers.

10. Procédé selon l'une quelconque des revendications précédentes, caractérisé en ce que la matière d'étanchéité est introduite sous pression, par vibration et/ou par enfoncement dans les canaux.

11. Procédé selon l'une quelconque des revendications 1 à 6, 9 et 10, caractérisé en ce que la matière ds'étanchéité est une matière céramique, et la différence entre le coefficient de dilatation thermique du corps céramique en nid d'abeilles, de 40°C à 800°C, et celui de la matière d'étanchéité, de 40°C à 800°C, n'est pas supérieure à $3,5 \times 10^{-6}/°C$.

12. Procédé selon la revendication 11, caractérisé en ce que ladite différence n'est pas supérieure à $2,5 \times 10^{-6}/°C$.

13. Procédé selon la revendication 11 ou 12, caractérisé en ce que le corps céramique en nid d'abeilles est en une matière céramique à base de cordiérite ou de mullite, et en ce que ladite matière d'étanchéité comprend une matière céramique à base de cordiérite ou une matière céramique à base de mullite.

14. Variante du procédé selon la revendication 1, selon laquelle les perforations des films correspondent à des canaux qui ne sont pas destinés à être obturés, une matière thermolabile, capable d'être dissipée au cours de la cuisson ou de l'obturation à chaud du nid d'abeilles, est introduite dans les canaux, les films sont retirés, et les canaux restants, dans lesquels la matière thermolabile n'a pas été introduite, sont obturés à l'aide d'une matière d'étanchéité.

FIG.1

FIG.2

FIG.3

FIG.4

FIG.5

## FIG.6

## FIG.7

## FIG.8

## FIG. 9

## FIG. 10

## FIG. 11

## FIG. 12

## FIG. 13

## FIG_14